# EUROPEAN PATENT APPLICATION

(11) **EP 4 645 828 A1**
(43) Date of publication of application: **05.11.2025**
(21) Application number: 23910395.5
(22) Date of filing: 22.12.2023
(51) Int. Cl.: H04L 67/12

(54) **DATA TRANSMISSION METHOD AND APPARATUS, AND INTELLIGENT DRIVING DEVICE**

(30) Priority: 30.12.2022 CN 202211725706
(71) Applicant: Shenzhen Yinwang Intelligent Technologies Co., Ltd., Shenzhen, Guangdong 518110 (CN)
(72) Inventor: ZHAO, Junxu, Shenzhen, Guangdong 518129 (CN)
(74) Representative: Maiwald GmbH
(86) International application number: PCT/CN2023/141004
(87) International publication number: WO 2024/140469

(57) **Abstract**

Embodiments of this application provide a data transmission method and apparatus, and an intelligent driving device. The method includes: A first node sends first data to a second node. The second node receives the first data from the first node. A third node obtains second data from the second node. The second data is data obtained by processing the first data by the second node, or the second data is the same as the first data. The first node, the second node, and the third node are connected in series, the first node and the second node are sensing nodes, and the third node is a regional communication unit or a data processing node. Embodiments of this application may be applied to an intelligent vehicle or an electric vehicle. A plurality of sensing nodes are connected in series to a regional communication unit or a data processing node, to help reduce complexity of networking and cabling between nodes.

## Description

This application claims priority to Chinese Patent Application No. 202211725706.5, filed with the China National Intellectual Property Administration on December 30, 2022 and entitled "DATA TRANSMISSION METHOD AND APPARATUS, AND INTELLIGENT DRIVING DEVICE", which is incorporated herein by reference in its entirety.

### TECHNICAL FIELD

Embodiments of this application relate to the field of intelligent driving, and more specifically, to a data transmission method and apparatus, and an intelligent driving device.

### BACKGROUND

As an autonomous driving level and environment complexity increase, a quantity and types of sensors in a vehicle gradually increase. In addition, a manner of collaboration between the sensors is more flexible and complex, from simple field of view stitching to area precision enhancement, target feature complementarity, and the like. A data transmission requirement also changes from a small amount of target data to feature data. This poses a great challenge to an existing networking communication technology of a sensor.

In a current networking manner, all sensors may be connected to a same controller. Because a quantity of sensors continuously increases with evolution of autonomous driving, such a networking manner has a great impact on in-vehicle cabling.

### SUMMARY

Embodiments of this application provide a data transmission method and apparatus, and an intelligent driving device, to reduce complexity of networking and cabling through serial networking.

The intelligent driving device in this application may include a transportation tool on a road, a transportation tool on water, an air transportation tool, an industrial device, an agricultural device, an entertainment device, or the like. For example, the intelligent driving device may be a vehicle. The vehicle is a vehicle in a broad sense, and may be a transportation tool (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent driving device may be a transportation tool like an airplane or a ship.

According to a first aspect, a data transmission method is provided. The method includes: A first node sends first data to a second node. The second node receives the first data from the first node. A third node obtains second data from the second node. The second data is data obtained by processing the first data by the second node, or the second data is the same as the first data. The first node, the second node, and the third node are connected in series, the first node and the second node are sensing nodes, and the third node is a regional communication unit or a data processing node.

In embodiments of this application, a plurality of sensing nodes are connected in series to a regional communication unit or a data processing node, to help reduce complexity of networking and cabling between nodes. In addition, a simple forwarding mechanism between the nodes can cover different scenarios of data transmission between a plurality of sensors, and no dedicated switch is required. This helps reduce costs of data transmission between the nodes.

The technical solutions in embodiments of this application can cover sensing node networking requirements in different scenarios from a low-level assisted driving scenario to a high-level assisted driving scenario, and have good evolution.

In some possible implementations, that the first node, the second node, and the third node are connected in series includes: The first node, the second node, and the third node are unidirectionally connected in series. Alternatively, the first node, the second node, and the third node are connected in a unidirectional ring manner. Alternatively, the first node, the second node, and the third node are bidirectionally connected in series. Alternatively, the first node, the second node, and the third node are connected in a bidirectional ring manner.

In some possible implementations, the first node and the second node are sensors. For example, the first node is a forward lidar, and the second node is an imaging radar.

In some possible implementations, the regional communication unit may also be referred to as a zonal controller.

In some possible implementations, the data processing unit may be a central computer (central computer).

In some possible implementations, the second node may be connected to the third node, or one or more nodes may be included between the second node and the third node. For example, a fourth node may be further included between the second node and the third node, and the fourth node may be a sensing node.

In some possible implementations, the first node may be connected to the second node; or one or more nodes may be included between the first node and the second node. For example, a fifth node may be further included between the first node and the second node, and the fifth node may be a sensing node.

In some possible implementations, the second data is data obtained by processing the first data by the second node. In this way, networking costs are reduced, uncertainty of data transmission and processing is greatly alleviated, complexity of data processing performed by the third node is reduced, and a data processing delay is also reduced.

With reference to the first aspect, in some implementations of the first aspect, a destination address of the first data is the second node, and before the third node obtains the second data from the second node, the method further includes: The second node stitches the first data and third data that is obtained by the second node through sensing, to obtain the second data.

In embodiments of this application, the second node may stitch the data sent by the first node and local data of the second node. In this way, the third node may receive data obtained through stitching, and does not need to stitch the data of the first node and the data of the second node. This helps relieve pressure of the third node during data processing, and also helps reduce scheduling complexity and a computing power requirement of the third node.

In some possible implementations, the first node may be a backward left radar, and the second node may be a backward right radar.

With reference to the first aspect, in some implementations of the first aspect, a destination address of the first data is the second node, and before the third node obtains the second data from the second node, the method further includes: The second node performs data fusion on the first data and fourth data that is obtained by the second node through sensing, to obtain the second data.

In embodiments of this application, the second node may perform data fusion on the data sent by the first node and local data of the second node. In this way, the third node may receive data obtained through data fusion, and does not need to perform data fusion on the data of the first node and the data of the second node. This helps reduce complexity of data transmission and scheduling, and helps reduce costs and a delay of data transmission.

In some possible implementations, the first node may be a forward lidar, and the second node may be an imaging radar.

With reference to the first aspect, in some implementations of the first aspect, the second node is a node that subscribes to data of the first node, a destination address of the first data is the third node, and before the third node obtains the second data from the second node, the method further includes: The second node stores the first data in the second node. The second node processes, based on the first data, fifth data obtained by the second node through sensing, to obtain the second data.

In embodiments of this application, the second node may subscribe to packet content of the first node, so that the data of the first node can be used to process data locally sensed by the second node. This helps improve accuracy of the data locally sensed by the second node. In addition, the third node may receive the data sent by the first node and the data sent by the second node, and does not need to use the data sent by the first node to process the data sent by the second node. This helps reduce complexity of data transmission and scheduling, and helps reduce costs and a delay of data transmission.

In some possible implementations, the first node may be a rear left radar, and the second node may be a front left radar.

In some possible implementations, that the second node processes, based on the first data, fifth data obtained by the second node through sensing includes: The second node optimizes, based on the first data, the fifth data obtained by the second node through sensing.

With reference to the first aspect, in some implementations of the first aspect, the method further includes: The third node obtains the first data from the second node.

With reference to the first aspect, in some implementations of the first aspect, a destination address of the first data is the second node, and before the third node obtains the second data from the second node, the method further includes: The second node performs data fusion on the first data and sixth data that is obtained by the second node through sensing, to obtain seventh data. The second node sends at least a part of the seventh data to the first node, where a destination address of at least the part of the data is the first node. The first node receives at least the part of the data from the second node. The first node processes at least the part of the data to obtain eighth data. The first node sends the eighth data to the second node, where a destination address of the eighth data is the second node. The second node receives the eighth data from the first node. The second node processes the eighth data, to obtain the second data.

In embodiments of this application, distributed collaboration may be performed between the first node and the second node, and a complex interaction process may be performed between the first node and the second node, so that a process in which the third node processes the data of the first node and the data of the second node is omitted. This helps relieve pressure of the third node during data processing, and also helps reduce data traffic outside the first node and the second node. For example, because data convergence is performed between the first node and the second node, data traffic between the second node and the third node can be reduced.

In some possible implementations, the first node may be a front left radar, and the second node may be a front right radar.

With reference to the first aspect, in some implementations of the first aspect, the first data includes a plurality of pieces of data, and the plurality of pieces of data are located in a plurality of virtual channels with different priorities in the first node. That a first node sends first data to a second node includes: The first node sends the plurality of pieces of data to the second node based on a priority of each of the plurality of virtual channels with different priorities.

In embodiments of this application, a plurality of virtual channels with different priorities may be configured in a node. When data is sent to a next node, data on a virtual channel with a high priority may be preferentially sent, so that data with a high data transmission priority is transmitted to the next node in time.

With reference to the first aspect, in some implementations of the first aspect, the first node, the second node, and the third node are located in a bidirectional ring network, the second data is transmitted to the third node in a first direction, and the method further includes: When it is detected that a connection fault occurs between a first sending port of the second node and a first receiving port of a fourth node, the second node sends a broadcast message indicating the connection fault, and the second node adjusts a data sending port from the first sending port to a second sending port. The fourth node is a next node connected to the first node in the first direction.

In embodiments of this application, when a connection fault occurs, the second node may adjust the sending port, so that the data sent by the first node to the third node can be sent to the third node through the second sending port. In this way, a redundant data path provided by a simple bidirectional ring network can be used, so that a connection fault problem can be adaptively resolved. This helps improve reliability of a node during data transmission, and also helps improve safety of an intelligent driving device.

With reference to the first aspect, in some implementations of the first aspect, the method further includes: The first node determines, based on the broadcast message, whether to adjust a data sending port.

In embodiments of this application, the node that receives the broadcast message may determine, with reference to network topology information, impact caused by the connection fault, and determine, based on local configuration information of the node, whether to update a forwarding policy. This helps improve flexibility of the node during data transmission.

According to a second aspect, a data transmission method is provided. The method includes: A second node receives first data from a first node; and the second node sends second data to a third node. The second data is data obtained by processing the first data by the second node, or the second data is the same as the first data. The first node, the second node, and the third node are connected in series, the first node and the second node are sensing nodes, and the third node is a regional communication unit or a data processing node.

With reference to the second aspect, in some implementations of the second aspect, a destination address of the first data is the second node, and before the second node sends the second data to the third node, the method further includes: The second node stitches the first data and third data that is obtained by the second node through sensing, to obtain the second data.

With reference to the second aspect, in some implementations of the second aspect, a destination address of the first data is the second node, and before the second node sends the second data to the third node, the method further includes: The second node performs data fusion on the first data and fourth data that is obtained by the second node through sensing, to obtain the second data.

With reference to the second aspect, in some implementations of the second aspect, the second node is a node that subscribes to data of the first node, a destination address of the first data is the third node, and before the second node sends the second data to the third node, the method further includes: The second node stores the first data in the second node. The second node processes, based on the first data, fifth data obtained by the second node through sensing, to obtain the second data.

With reference to the second aspect, in some implementations of the second aspect, the method further includes: The second node sends the first data to the third node.

With reference to the second aspect, in some implementations of the second aspect, a destination address of the first data is the second node, and before the second node sends the second data to the third node, the method further includes: The second node performs data fusion on the first data and sixth data that is obtained by the second node through sensing, to obtain seventh data. The second node sends at least a part of the seventh data to the first node, where a destination address of at least the part of the data is the first node. The second node receives the eighth data from the first node, where the eighth data is data obtained by processing at least the part of the data by the first node, and a destination address of the eighth data is the second node. The second node processes the eighth data, to obtain the second data.

With reference to the second aspect, in some implementations of the second aspect, the second data includes a plurality of pieces of data, and the plurality of pieces of data are located in a plurality of virtual channels with different priorities in the second node. That the second node sends second data to a third node includes: The second node sends the plurality of pieces of data to the third node based on a priority of each of the plurality of virtual channels with different priorities.

With reference to the second aspect, in some implementations of the second aspect, the first node, the second node, and the third node are located in a bidirectional ring network, the second data is transmitted to the third node in a first direction, and the method further includes: When it is detected that a connection fault occurs between a first sending port of the second node and a first receiving port of a fourth node, the second node sends a broadcast message indicating the connection fault, and the second node adjusts a data sending port from the first sending port to a second sending port. The fourth node is a next node connected to the second node in the first direction.

According to a third aspect, a data transmission method is provided. The method includes: A third node receives second data from a second node, where the second data is data obtained by processing first data from a first node by the second node, or the second data is the same as the first data. The third node processes the second data. The first node, the second node, and the third node are connected in series, the first node and the second node are sensing nodes, and the third node is a regional communication unit or a data processing node.

With reference to the third aspect, in some implementations of the third aspect, that the third node processes the second data includes: The third node generates a vehicle control instruction based on the second data.

According to a fourth aspect, a data transmission apparatus is provided. The apparatus includes: a receiving unit, configured to receive first data from a first node; and a sending unit, configured to send second data to a third node. The second data is data obtained by processing the first data by a processing unit of the apparatus, or the second data is the same as the first data. The first node, the apparatus, and the third node are connected in series, the first node and the apparatus are sensing nodes, and the third node is a regional communication unit or a data processing node.

With reference to the fourth aspect, in some implementations of the fourth aspect, a destination address of the first data is the apparatus, and the processing unit is configured to stitch the first data and third data that is obtained by the apparatus through sensing, to obtain the second data.

With reference to the fourth aspect, in some implementations of the fourth aspect, a destination address of the first data is the apparatus, and the processing unit is configured to perform data fusion on the first data and fourth data that is obtained by the apparatus through sensing, to obtain the second data.

With reference to the fourth aspect, in some implementations of the fourth aspect, the apparatus is a node that subscribes to data of the first node, and a destination address of the first data is the third node. The processing unit is configured to: store the first data in the apparatus; and process, based on the first data, fifth data obtained by the apparatus through sensing, to obtain the second data.

With reference to the fourth aspect, in some implementations of the fourth aspect, the sending unit is further configured to send the first data to the third node.

With reference to the fourth aspect, in some implementations of the fourth aspect, a destination address of the first data is the apparatus. The processing unit is configured to perform data fusion on the first data and sixth data that is obtained by the apparatus through sensing, to obtain seventh data. The sending unit is further configured to send at least a part of the seventh data to the first node, where a destination address of at least the part of the data is the first node. The receiving unit is further configured to receive the eighth data from the first node, where the eighth data is data obtained by processing at least the part of the data by the first node, and a destination address of the eighth data is the apparatus. The processing unit is further configured to process the eighth data, to obtain the second data.

With reference to the fourth aspect, in some implementations of the fourth aspect, the second data includes a plurality of pieces of data, and the plurality of pieces of data are located in a plurality of virtual channels with different priorities in the apparatus. The sending unit is configured to send the plurality of pieces of data to the third node based on a priority of each of the plurality of virtual channels with different priorities.

With reference to the fourth aspect, in some implementations of the fourth aspect, the apparatus further includes a detection unit and a port adjustment unit, the first node, the apparatus, and the third node are located in a bidirectional ring network, and the second data is transmitted to the third node in a first direction. The detection unit is configured to detect that a connection fault occurs between a first sending port of the apparatus and a first receiving port of a fourth node, where the fourth node is a next node connected to the apparatus in the first direction. The sending unit is configured to send, through a second sending port, a broadcast message indicating the connection fault. The port adjustment unit is configured to adjust a data sending port from the first sending port to the second sending port.

According to a fifth aspect, a data transmission apparatus is provided. The apparatus includes: a receiving unit, configured to receive second data from a second node, where the second data is data obtained by processing first data from a first node by the second node, or the second data is the same as the first data; and a processing unit, configured to process the second data. The first node, the second node, and the apparatus are connected in series, the first node and the second node are sensing nodes, and the apparatus is a regional communication unit or a data processing node.

With reference to the fifth aspect, in some implementations of the fifth aspect, the processing unit is configured to generate a vehicle control instruction based on the second data.

According to a sixth aspect, a data transmission apparatus is provided. The apparatus includes: a memory, configured to store computer instructions; and a processor, configured to execute the computer instructions stored in the memory, so that the apparatus performs the data transmission method in the first aspect, the second aspect, or the third aspect.

According to a seventh aspect, an intelligent driving device is provided. The intelligent driving device includes the data transmission apparatus according to any one of the fourth aspect, the fifth aspect, or the sixth aspect.

With reference to the seventh aspect, in some implementations of the seventh aspect, the intelligent driving device is a vehicle.

According to an eighth aspect, a computer program product is provided. The computer program product includes computer program code. When the computer program code is run on a computer, the computer is enabled to perform the data transmission method in the first aspect, the second aspect, or the third aspect.

The computer program code may be completely or partially stored in a first storage medium. The first storage medium may be encapsulated with a processor, or encapsulated separately from a processor. This is not specifically limited in embodiments of this application.

According to a ninth aspect, a computer-readable medium is provided. The computer-readable medium stores program code, and when the computer program code is run on a computer, the computer is enabled to perform the method in the first aspect, the second aspect, or the third aspect.

According to a tenth aspect, an embodiment of this application provides a chip system. The chip system includes a processor, configured to invoke a computer program or computer instructions stored in a memory, so that the processor performs the method according to the first aspect, the second aspect, or the third aspect.

With reference to the tenth aspect, in a possible implementation, the processor is coupled to the memory through an interface.

With reference to the tenth aspect, in a possible implementation, the chip system further includes a memory, and the memory stores a computer program or computer instructions.

According to an eleventh aspect, a chip is provided. The chip includes a circuit, and the circuit is configured to perform the method according to the first aspect, the second aspect, or the third aspect.

### BRIEF DESCRIPTION OF DRAWINGS

FIG. 1 is a functional block diagram of a vehicle according to an embodiment of this application;
FIG. 2 is a diagram of two vehicle architectures according to an embodiment of this application;
FIG. 3(a) to FIG. 3(c) show a plurality of networking architectures according to an embodiment of this application;
FIG. 4 shows a connection manner between different sensors according to an embodiment of this application;
FIG. 5 is a schematic flowchart of a data transmission method according to an embodiment of this application;
FIG. 6 is a diagram of a backward radar field of view stitching scenario according to an embodiment of this application;
FIG. 7 is another schematic flowchart of a data transmission method according to an embodiment of this application;
FIG. 8 is a diagram of a scenario in which feature-level fusion is performed on data collected by a forward lidar and an imaging radar according to an embodiment of this application;
FIG. 9 is another schematic flowchart of a data transmission method according to an embodiment of this application;
FIG. 10 is a diagram of a scenario in which a rear left radar and a front left radar are combined for target tracking according to an embodiment of this application;
FIG. 11 is another schematic flowchart of a data transmission method according to an embodiment of this application;
FIG. 12 is a diagram of a scenario in which a front left radar and a front right radar perform distributed collaboration according to an embodiment of this application;
FIG. 13 is another schematic flowchart of a data transmission method according to an embodiment of this application;
FIG. 14 is a diagram of transmitting data through a virtual channel according to an embodiment of this application;
FIG. 15 is a diagram of fault detection based on bidirectional ring networking according to an embodiment of this application;
FIG. 16 is a block diagram of a data transmission apparatus according to an embodiment of this application; and
FIG. 17 is another block diagram of a data transmission apparatus according to an embodiment of this application.

### DESCRIPTION OF EMBODIMENTS

The following describes the technical solutions in embodiments of this application with reference to the accompanying drawings in embodiments of this application. In the descriptions of embodiments of this application, "/" represents "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists.

In embodiments of this application, prefix words such as "first" and "second" are used only to distinguish different described objects, and do not limit a location, a sequence, a priority, a quantity, or content of described objects. In embodiments of this application, use of a prefix word, for example, an ordinal number, used to distinguish described objects does not constitute a limitation on the described objects. For descriptions of the described objects, refer to the descriptions of the context in the claims or embodiments. The use of such a prefix word should not constitute a redundant limitation. In addition, in the descriptions of embodiments, unless otherwise specified, "a plurality of" means two or more.

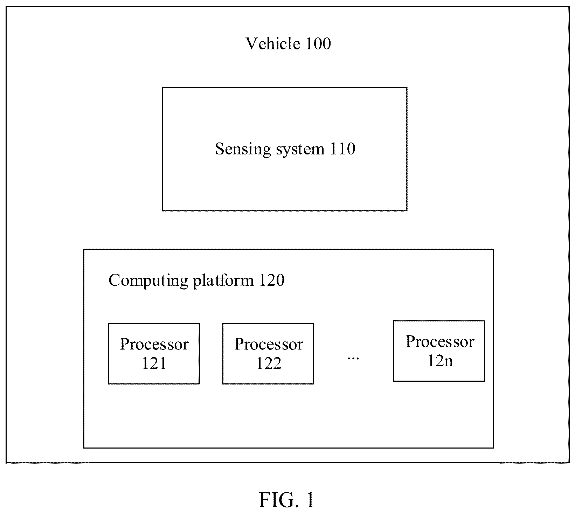

FIG. 1 is a functional block diagram of a vehicle 100 according to an embodiment of this application. The vehicle 100 may include a sensing system 110 and a computing platform 120. The sensing system 110 may include several sensors that sense information about an ambient environment of the vehicle 100. For example, the sensing system 110 may include a positioning system, and the positioning system may be a global positioning system (global positioning system, GPS), or may be a BeiDou system or another positioning system, or an inertial measurement unit (inertial measurement unit, IMU). For another example, the sensing system 110 may further include one or more of a lidar, a millimeter-wave radar, an ultrasonic radar, and a camera apparatus.

Some or all functions of the vehicle 100 may be controlled by the computing platform 120. The computing platform 120 may include processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions. Some or all of the processors 121 to 12n may invoke the instructions in the memory to execute the instructions, to implement a corresponding function.

The computing platform 120 and the sensing system 110 may be located in different apparatuses, or the computing platform 120 and the sensing system 110 may be located in a same apparatus.

As described above, in a current networking manner, all sensors may be connected to a same controller. Because a quantity of sensors continuously increases with evolution of autonomous driving, such a networking manner has a great impact on in-vehicle cabling.

Embodiments of this application provide a data processing method and apparatus, and an intelligent driving device. A plurality of sensing nodes are connected in series to a regional communication unit or a data processing node, to help reduce complexity of networking and cabling between nodes. In addition, a simple forwarding mechanism between the nodes can cover different scenarios of data transmission between a plurality of sensors, and no dedicated switch is required. This helps reduce costs of data transmission between the nodes.

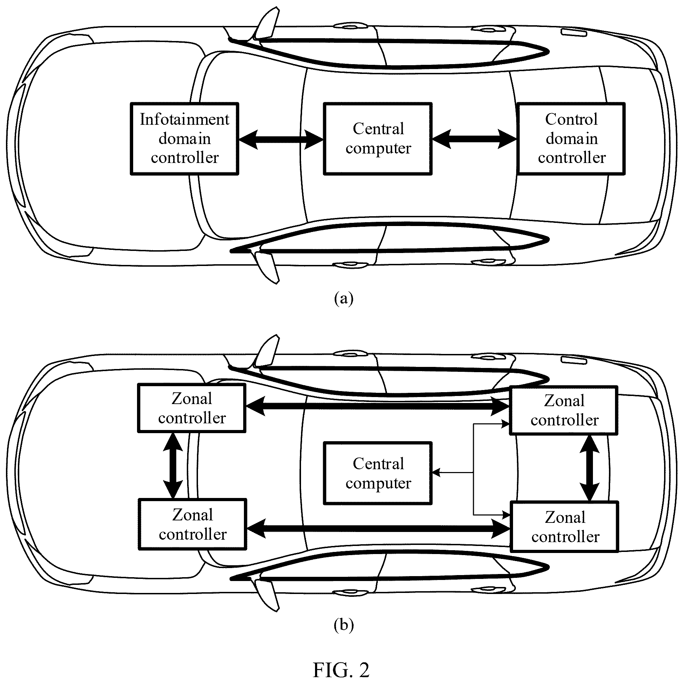

FIG. 2 is a diagram of two vehicle architectures according to an embodiment of this application. Herein, (a) in FIG. 2 is a diagram of a domain architecture (domain architecture). A feature of the domain architecture is that an operation processing unit is separately a central computer (central computer) and a domain controller (domain controller). Different domain controllers are classified based on dedicated functions, for example, an infotainment domain controller (infotainment domain controller) that controls an in-vehicle infotainment system and a control domain controller (control domain controller) that controls a running status of a vehicle body. Different domain controllers may be connected to sensors and actuators that have different functions. When the vehicle runs, the central computer receives a signal and sends an instruction via different domain controllers.

Herein, (b) in FIG. 2 is a diagram of a zonal architecture (zonal architecture). A feature of the zonal architecture is that an operation processing unit is divided into a central computer and a zonal controller (zonal controller). A vehicle-mounted sensor and an actuator are allocated to different zonal controllers based on zones in which positions of the vehicle-mounted sensor and the actuator are located. For example, a zonal controller in the left front of the vehicle may be connected to a sensor and a control actuator that are deployed in a left front zone of the vehicle. Compared with the domain architecture, the zonal architecture is more suitable for a development trend of electrification. Cabling costs caused by an increase of sensors and an increase of actuators can be greatly reduced. In addition, communication between different domains may no longer depend on the central computer for forwarding. Fast forwarding can be performed between different functional domains through a ring network structure including the zonal controller, to reduce a data transmission delay.

For example, the central computer shown in (b) in FIG. 2 may include a mobile data center (mobile data center, MDC). The MDC may be configured to implement an autonomous driving function. The MDC is responsible for processing an external signal and sending an instruction. The zonal controller shown in (b) in FIG. 2 may include a vehicle integration unit (vehicle integration unit, VIU). The VIU is responsible for receiving a signal from a sensing node (for example, a sensor) and sending the signal to the MDC, and forwarding, to an actuator, for example, an integrated power unit (integrated power unit, IPU), an electrical power system (electrical power system, EPS), or an electrical brake system (electrical brake system, EBS), a control instruction sent by the MDC.

The foregoing zonal controller is described by using the VIU as an example. The zonal controller may alternatively be a controller of another type or named after another name. This is not limited in embodiments of this application.

The foregoing uses an example in which the central computer includes the MDC for description. The central computer may further include an intelligent cockpit domain controller (cockpit domain controller, CDC), a vehicle domain controller (vehicle domain controller, VDC), and the like. The CDC may be configured to implement cockpit control, and the VDC may be configured to implement vehicle function control (for example, steering or braking).

The mobile data center, the cockpit domain controller, the vehicle domain controller, the zonal controller, the vehicle integration unit, and the like that are described in embodiments of this application may have other names. In this application, only the MDC, the CDC, the VDC, the VIU, and the like are used as examples, and are not intended to limit a specific implementation.

As a regional communication unit, the VIU may be deployed at a position in which sensors and actuators of the vehicle are dense, so that the sensors and the actuators of the vehicle can be connected nearby. In addition, the VIU may have specific computing and driving capabilities (for example, the VIU may possess driving and computing functions of some actuators). The sensors include but are not limited to the camera, a microphone, an ultrasonic radar, a millimeter-wave radar, a lidar, a vehicle speed sensor, a motor power sensor, an engine rotation speed sensor, and the like.

The VIU may possess driving and computing functions of some sensors and actuators. In this way, when the CDC or VDC is faulty, the VIU can directly process data collected by the sensor, and then drive a peripheral actuator to execute a corresponding control instruction.

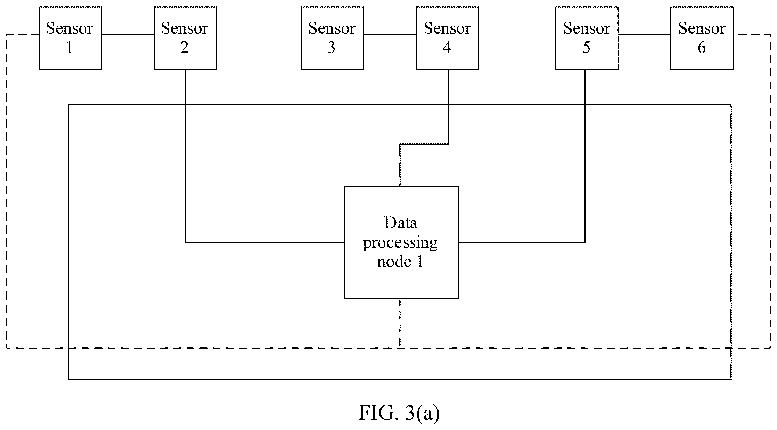

FIG. 3(a) to FIG. 3(c) are diagrams of networking architectures according to an embodiment of this application.

As shown in FIG. 3(a), the networking architecture is a grouped serial networking architecture. A sensor 1 and a sensor 2 are connected in series to a data processing node 1. A sensor 3 and a sensor 4 are connected in series to the data processing node 1. A sensor 5 and a sensor 6 are connected in series to the data processing node 1.

The data processing node 1 may be the infotainment domain controller, the central computer, the control domain controller, or the like shown in (a) in FIG. 2.

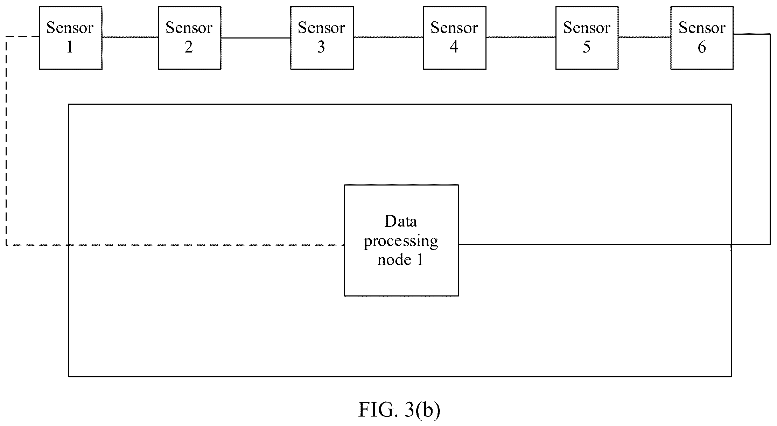

As shown in FIG. 3(b), the networking architecture may be a fully serial networking architecture. The sensor 1, the sensor 2, the sensor 3, the sensor 4, the sensor 5, and the sensor 6 are connected in series to the data processing node 1.

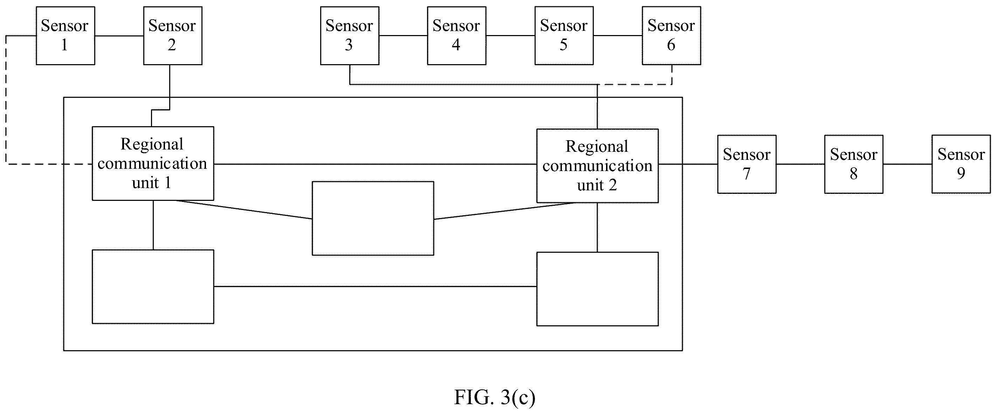

As shown in FIG. 3(c), the networking architecture may be a grouped partitioned serial networking architecture. The sensor 1 and the sensor 2 are connected in series to a regional communication unit 1. The sensor 3, the sensor 4, the sensor 5, and the sensor 6 are connected in series to a regional communication unit 2. The sensor 7, the sensor 8, and the sensor 9 are connected in series to the regional communication unit 2.

The regional communication unit 1 and the regional communication unit 2 each may be the zonal controller shown in (b) in FIG. 2, for example, the VIU.

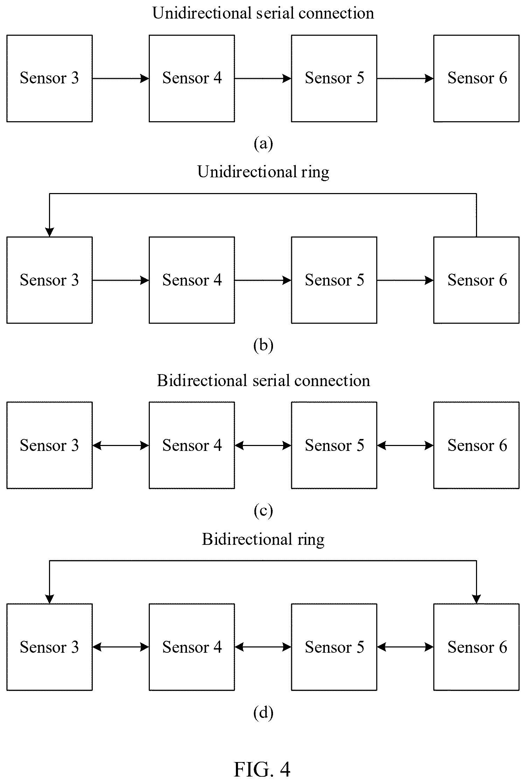

The foregoing shows, with reference to FIG. 3(a) to FIG. 3(c), the plurality of networking architectures provided in embodiments of this application. The following uses the sensor 3, the sensor 4, the sensor 5, and the sensor 6 shown in FIG. 3(c) as an example to describe a connection manner between different sensors with reference to FIG. 4. (a) to (d) in FIG. 4 respectively show a unidirectional serial connection manner, a unidirectional ring connection manner, a bidirectional serial connection manner, and a bidirectional ring connection manner.

The foregoing different networking architectures and different connection manners between sensors can adapt to a plurality of application scenarios from a simple and low-cost scenario to a complex and highly-reliable scenario.

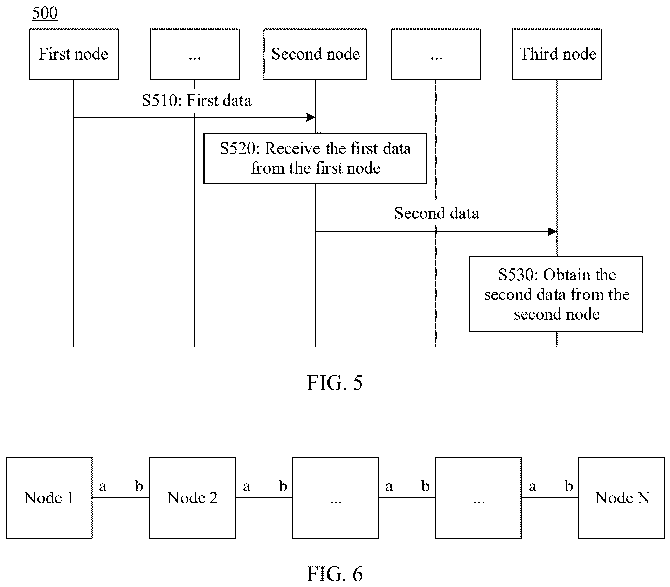

FIG. 5 is a schematic flowchart of a data transmission method 500 according to an embodiment of this application. As shown in FIG. 5, the method 500 includes the following steps.

S510: A first node sends first data to a second node, where the first node and the second node are sensing nodes.

For example, the first node may be the sensor 1, and the second node may be the sensor 2.

Optionally, the first node may be connected to the second node. Alternatively, one or more nodes may be included between the first node and the second node, and the first node may be connected in series to the second node through the one or more nodes. For example, a fifth node may be further included between the first node and the second node, and the fifth node may be a sensing node.

S520: The second node receives the first data from the first node.

Optionally, the first node may be connected to the second node. That the second node receives the first data from the first node includes: The second node receives the first data sent by the first node.

Optionally, one or more nodes may alternatively be included between the first node and the second node, and the first node may be connected in series to the second node through the one or more nodes. That the second node receives the first data from the first node includes: The second node receives the first data from the first node through the one or more nodes.

S530: The second node sends second data to a third node, where the second data is data obtained by processing the first data by the second node or the second data is the same as the first data. The first node, the second node, and the third node are connected in series, and the third node is a regional communication unit or a data processing node.

Correspondingly, the third node obtains the second data from the second node.

Optionally, the regional communication unit may also be referred to as a zonal controller. For example, the regional communication unit may be the foregoing VIU.

Optionally, the data processing unit may be a central computer (central computer). For example, the data processing node may include the foregoing MDC.

Optionally, the second node may be connected to the third node. That the third node obtains the second data from the second node includes: The third node receives the second data sent by the second node.

Optionally, one or more nodes may alternatively be included between the second node and the third node. For example, a fourth node may be further included between the second node and the third node, and the fourth node may be a sensing node. That the third node obtains the second data from the second node includes: The third node receives the second data from the second node through the one or more nodes.

In embodiments of this application, a plurality of sensing nodes are connected in series to a regional communication unit or a data processing node, to help reduce complexity of networking and cabling between nodes. In addition, a simple forwarding mechanism between the nodes can cover different scenarios of data transmission between a plurality of sensors, and no dedicated switch is required. This helps reduce costs of data transmission between the nodes.

The technical solutions in embodiments of this application can cover sensing node networking requirements in different scenarios from a low-level assisted driving scenario to a high-level assisted driving scenario, and have good evolution.

Optionally, a destination address of the first data is the second node, and before the third node obtains the second data from the second node, the method 500 further includes: The second node stitches the first data and third data that is obtained by the second node through sensing, to obtain the second data.

FIG. 6 is a diagram of a backward radar field of view stitching scenario according to an embodiment of this application. As shown in FIG. 6, a node 1 may be a backward left radar of a vehicle, a node 2 may be a backward right radar of the vehicle, and a node N may be a regional communication unit (for example, a VIU) or a data processing node (for example, an MDC).

The node 1 may be the first node, the node 2 may be the second node, and the node N may be the third node.

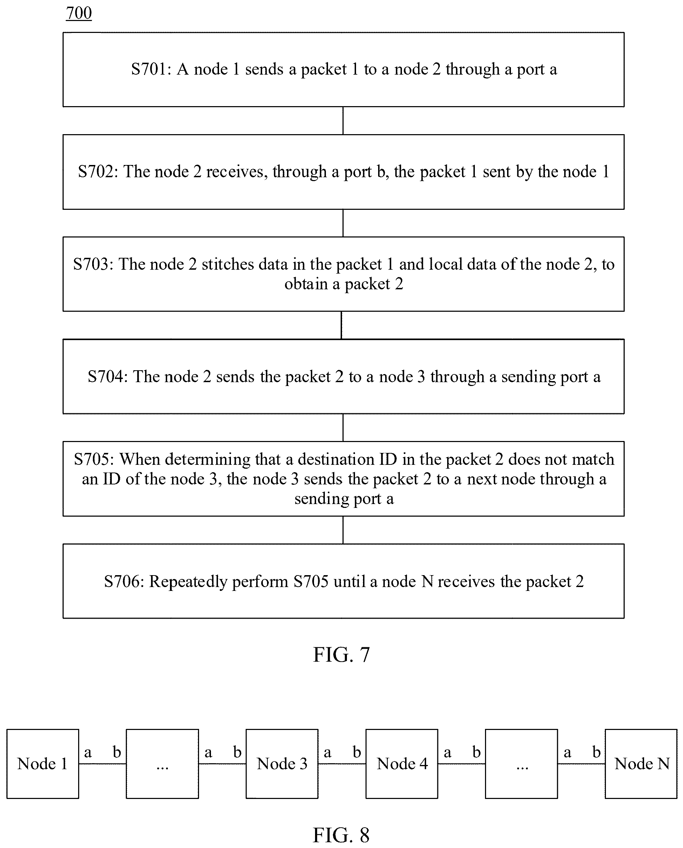

For the scenario shown in FIG. 6, FIG. 7 is a schematic flowchart of a data transmission method 700 according to an embodiment of this application. As shown in FIG. 7, the method 700 includes the following steps.

S701: The node 1 sends a packet 1 to the node 2 through a port a.

For example, a type of the packet 1 is a type 1.

In an embodiment, sending ports used by different nodes to send different types of packets may be preconfigured. For example, Table 1 shows sending ports used by the node 1 and the node 2 to the node N to send different types of packets.

**Table 1**

| Packet type | Node | Sending port |
|---|---|---|
| Type 1 | Node 1 | a |
| | Node 2 | a |
| | ... | ... |
| Type 2 | Node 1 | c |
| | Node 2 | c |
| | ... | ... |
| ... | ... | ... |

For example, when data stitching or data fusion needs to be performed on a packet generated by the node 1 at the node 2, the node 1 may choose to send the packet through the sending port a. For another example, when a connection fault occurs between the sending port a of the node 1 and a receiving port b of the node 2, the node 1 may choose to send a broadcast message through a sending port b. The broadcast message indicates that the connection fault occurs between the sending port a of the node 1 and the receiving port b of the node 2.

Table 1 is merely an example. This is not limited in embodiments of this application.

In an embodiment, the packet 1 includes identification information of a source node and identification information of a destination node. The identification information of the source node indicates a node that generates the packet, and the identification information of the destination node indicates a node that processes the packet. For example, the identification information of the source node may be a source identity (identity, ID), and an identity of the destination node may be a destination ID. For example, the source ID in the packet 1 may be 1, and the destination ID in the packet 1 may be 2.

S702: The node 2 receives, through the port b, the packet 1 sent by the node 1.

After receiving the packet 1, the node 2 may parse the packet 1 to obtain information about the source ID and the destination ID. When the destination ID in the packet 1 matches an ID of the node 2, S703 may be performed. Otherwise, the node 2 may directly forward the packet 1 to a next node (for example, a node 3) through the sending port a.

That the destination ID in the packet 1 matches an ID of the node 2 may be understood as that the destination ID in the packet 1 is the same as the ID of the node 2.

S703: The node 2 stitches data in the packet 1 and local data of the node 2, to obtain a packet 2.

For example, the node 1 is the backward left radar of the vehicle, and the node 2 is the backward right radar of the vehicle. The backward right radar may stitch data collected by the backward right radar and data that is collected by the backward left radar and that is in the packet 1, to obtain the packet 2. The node 2 may further add information about a source ID and a destination ID to the packet 2, where the source ID may be 2, and the destination ID may be N.

S704: The node 2 sends the packet 2 to the node 3 through the sending port a.

S705: When determining that the destination ID in the packet 2 does not match an ID of the node 3, the node 3 sends the packet 2 to a next node through a sending port a.

After receiving the packet 2 through a receiving port b, the node 3 may parse the packet 2. When the destination ID in the packet 2 does not match the ID of the node 3, the node 3 may directly forward the packet 2 to the next node through the sending port a.

S706: Repeatedly perform S705 until the node N receives the packet 2.

After receiving the packet 2 through a receiving port b, the node N may parse the packet 2. When the destination ID in the packet 2 matches an ID of the node N, the node N may process data in the packet 2. For example, the node N may further perform subsequent processing such as fusion sensing and planning and control on data obtained through stitching in the packet 2.

In embodiments of this application, the node 2 may stitch the data sent by the node 1 and the local data of the node 2. In this way, the node N may receive data obtained through stitching, and does not need to stitch the data of the node 1 and the data of the node 2. This helps relieve pressure of the node N during data processing, and reduce scheduling complexity and a computing power requirement of the node N.

Optionally, a destination address of the first data is the second node, and before the third node obtains the second data from the second node, the method 500 further includes: The second node performs data fusion on the first data and fourth data that is obtained by the second node through sensing, to obtain the second data.

FIG. 8 is a diagram of a scenario in which feature-level fusion is performed on data collected by a forward lidar and an imaging radar according to an embodiment of this application. As shown in FIG. 8, a node 3 may be a forward lidar, a node 4 may be an imaging radar, and a node N may be a regional communication unit (for example, a VIU) or a data processing node (for example, an MDC).

The node 3 may be the first node, the node 4 may be the second node, and the node N may be the third node.

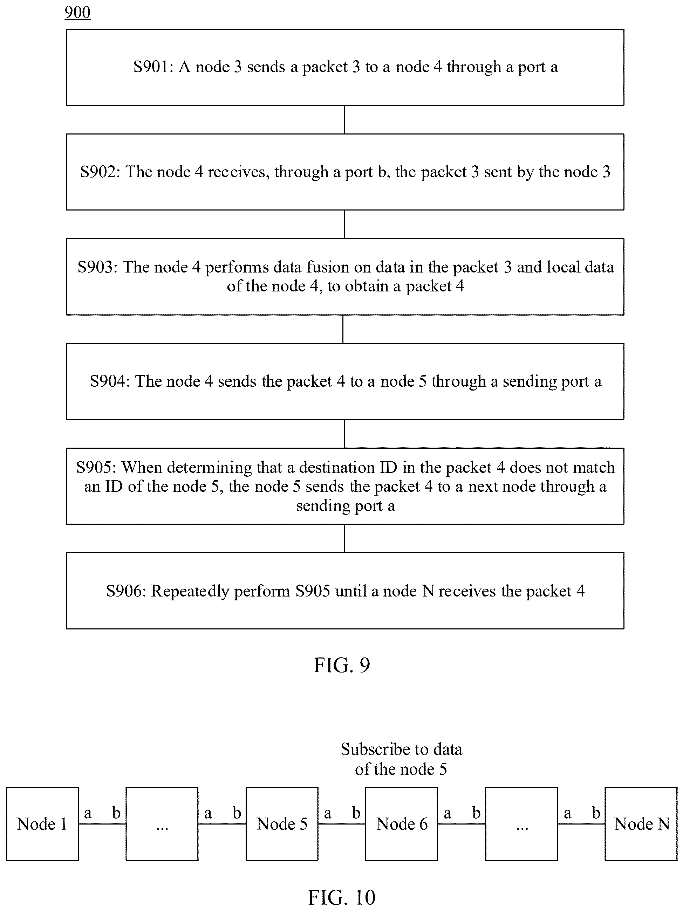

For the scenario shown in FIG. 8, FIG. 9 is a schematic flowchart of a data transmission method 900 according to an embodiment of this application. As shown in FIG. 9, the method 900 includes the following steps.

S901: The node 3 sends a packet 3 to the node 4 through a port a.

In an embodiment, sending ports used by different nodes to send different types of packets may be preconfigured. For this process, refer to the descriptions in the method 700. Details are not described herein again.

In an embodiment, the packet 3 may include information about a source ID and a destination ID. For example, the source ID may be 3, and the destination ID may be 4.

S902: The node 4 receives, through a port b, the packet 3 sent by the node 3.

After receiving the packet 3, the node 4 may parse the packet 3 to obtain the information about the source ID and the destination ID. When the destination ID in the packet 3 matches an ID of the node 4, S903 may be performed. Otherwise, the node 4 may directly forward the packet 3 to a next node through a sending port a.

S903: The node 4 performs data fusion on the data in the packet 3 and local data of the node 4, to obtain a packet 4.

For example, the node 3 is the forward lidar and the node 4 is the imaging radar. The imaging radar may perform data fusion on the data of the imaging radar and the data collected by the forward lidar in the packet 3, to obtain the packet 4. The node 4 may further add information about a source ID and a destination ID to the packet 4, where the source ID may be 4, and the destination ID may be N.

S904: The node 4 sends the packet 4 to a node 5 through the sending port a.

S905: When determining that the destination ID in the packet 4 does not match an ID of the node 5, the node 5 sends the packet 4 to a next node through a sending port a.

After receiving the packet 4 through a receiving port b, the node 5 may parse the packet 4. When the destination ID in the packet 4 does not match the ID of the node 5, the node 5 may directly forward the packet 4 to the next node through the sending port a.

S906: Repeatedly perform S905 until the node N receives the packet 4.

After receiving the packet 4 through a receiving port b, the node N may parse the packet 4. When the destination ID in the packet 4 matches an ID of the node N, the node N may process data in the packet 4. For example, the node N may further perform subsequent processing such as fusion sensing and planning and control on data obtained through data fusion in the packet 4.

In embodiments of this application, the node 4 may perform data fusion on the data sent by the node 3 and the local data of the node 4. In this way, the node N may receive the data obtained through data fusion, and does not need to perform data fusion on the data of the node 3 and the data of the node 4. This helps reduce complexity of data transmission and scheduling, and helps reduce costs and a delay of data transmission.

Optionally, the second node is a node that subscribes to data of the first node, a destination address of the first data is the third node, and before the third node obtains the second data from the second node, the method 500 further includes: The second node stores the first data in the second node. The second node processes, based on the first data, fifth data obtained by the second node through sensing, to obtain the second data.

That the second node is a node that subscribes to data of the first node may be understood as: When data that is sent by the first node to the third node and whose a destination address is the third node is transmitted to the second node, the second node may locally store the data in the second node, and may process the local data of the second node based on the data.

Optionally, the method 500 further includes: The third node obtains the first data from the second node.

FIG. 10 is a diagram of a scenario in which a rear left radar and a front left radar are combined for target tracking according to an embodiment of this application. As shown in FIG. 10, a node 5 may be a rear left radar, a node 6 may be a front left radar, and a node N may be a regional communication unit (for example, a VIU) or a data processing node (for example, an MDC).

The node 5 may be the first node, the node 6 may be the second node, and the node N may be the third node.

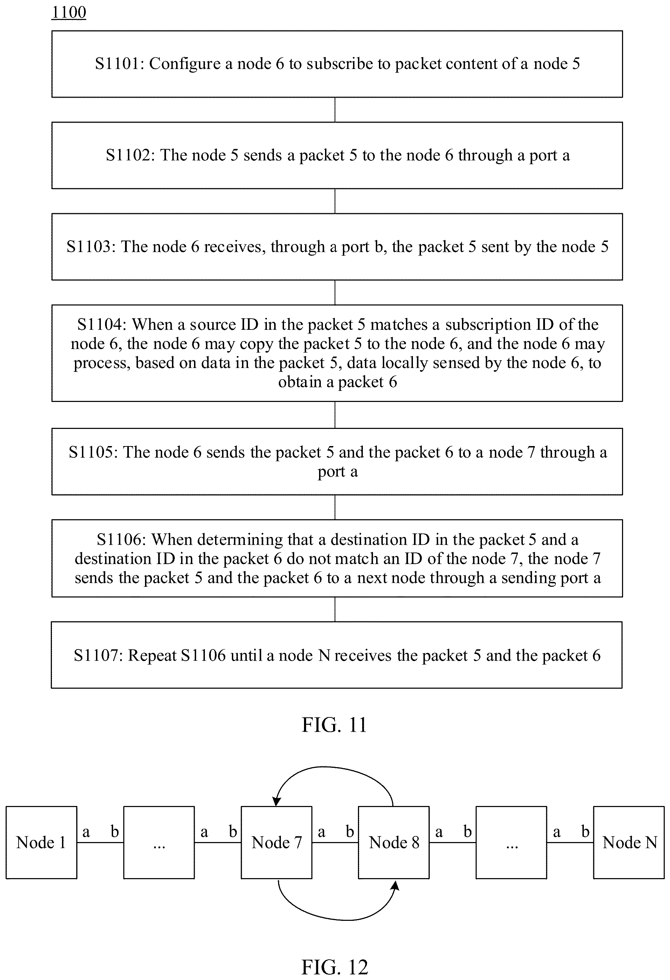

For the scenario shown in FIG. 10, FIG. 11 is a schematic flowchart of a data transmission method 1100 according to an embodiment of this application. As shown in FIG. 11, the method 1100 includes the following steps.

S1101: Configure the node 6 to subscribe to packet content of the node 5.

After the node 6 subscribes to the packet content of the node 5, the node 6 may store a subscription ID (for example, the subscription ID is 5). When a source ID in a packet received by the node 6 matches the subscription ID, the node 6 may copy the packet to the node 6. The node 6 may process local data of the node 6 based on the packet.

The packet content of the node 5 that is subscribed to by the node 6 may be configured in advance. Alternatively, in an initialization process, a node sends configuration information to the node 6, where the configuration information indicates the node 6 to subscribe to the packet content of the node 5. After receiving the configuration information, the node 6 may subscribe to the packet content of the node 5 based on the configuration information.

S1102: The node 5 sends a packet 5 to the node 6 through a port a.

In an embodiment, sending ports used by different nodes to send different types of packets may be preconfigured. For this process, refer to the descriptions in the method 700. Details are not described herein again.

For example, the packet 5 includes information about a source ID and a destination ID. For example, the source ID is 5, and the destination ID is N.

S1103: The node 6 receives, through a port b, the packet 5 sent by the node 5.

After receiving the packet 5, the node 6 may parse the packet 5 to obtain the information about the source ID and the destination ID. When the source ID in the packet 5 matches the subscription ID, S1104 may be performed. Otherwise, the node 6 may directly forward the packet 5 to a next node through a sending port b.

S1104: When the source ID in the packet 5 matches the subscription ID of the node 6, the node 6 may copy the packet 5 to the node 6, and the node 6 may process, based on data in the packet 5, data locally sensed by the node 6, to obtain a packet 6. A source ID in the packet 6 is 6 and a destination ID in the packet 6 is N.

For example, the packet 5 includes data that is of a target 1 and that is collected by the rear left radar from a moment T₁ to a moment T₂. The data sensed by the node 6 includes data that is of the target 1 and that is collected by the front left radar from the moment T₂ to a moment T₃. In this way, the node 6 may optimize, based on the data of the target 1 from the moment T₁ to the moment T₂, the data that is of the target 1 and that is collected by the node 6 from the moment T₂ to the moment T₃.

S1105: The node 6 sends the packet 5 and the packet 6 to a node 7 through a port a.

There is no actual sequence in which the node 6 sends the packet 5 and the packet 6 to the node 7. The packet 5 may be first forwarded to the node 7 and then the packet 6 is sent to the node 7. Alternatively, the packet 5 and the packet 6 may be simultaneously sent to the node 7 after the packet 6 is obtained through processing.

S1106: When determining that the destination ID in the packet 5 and the destination ID in the packet 6 do not match an ID of the node 7, the node 7 sends the packet 5 and the packet 6 to a next node through a sending port a.

S1107: Repeat S1106 until the node N receives the packet 5 and the packet 6.

After receiving the packet 5 and the packet 6 through a receiving port b, the node N may parse the packet 5 and the packet 6. When the destination ID in the packet 5 and the destination ID in the packet 6 match an ID of the node N, the node N may process data in the packet 5 and the packet 6. For example, the node N may further perform subsequent processing such as fusion sensing and planning and control on the data in the packet 5 and the packet 6.

In embodiments of this application, the node 6 may subscribe to a packet of the node 5, so that data of the node 5 can be used to perform optimization on data locally sensed by the node 6. This helps improve accuracy of the data locally sensed by the node 6. In addition, after receiving a packet sent by the node 5 and a packet sent by the node 6, the node N may not need to use the packet sent by the node 5 to optimize the packet sent by the node 6. This helps reduce complexity of data transmission and scheduling, and helps reduce costs and a delay of data transmission.

Optionally, a destination address of the first data is the second node, and before the third node obtains the second data from the second node, the method 500 further includes: The second node performs data fusion on the first data and sixth data that is obtained by the second node through sensing, to obtain seventh data. The second node sends at least a part of the seventh data to the first node, where a destination address of at least the part of the data is the first node. The first node receives at least the part of the data from the second node. The first node processes at least the part of the data to obtain eighth data. The first node sends the eighth data to the second node, where a destination address of the eighth data is the second node. The second node receives the eighth data from the first node. The second node processes the eighth data, to obtain the second data.

FIG. 12 is a diagram of a scenario in which a front left radar and a front right radar perform distributed collaboration according to an embodiment of this application. As shown in FIG. 12, a node 7 may be a front left radar, a node 8 may be a front right radar, and a node N may be a regional communication unit (for example, a VIU) or a data processing node (for example, an MDC).

The node 7 may be the first node, the node 8 may be the second node, and the node N may be the third node.

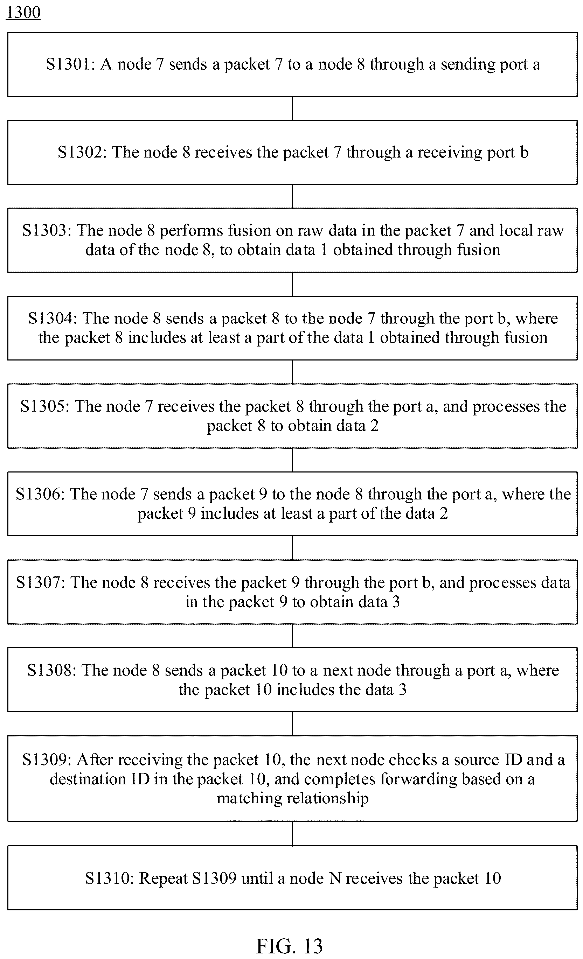

For the scenario shown in FIG. 12, FIG. 13 is a schematic flowchart of a data transmission method 1300 according to an embodiment of this application. As shown in FIG. 13, the method 1300 includes the following steps.

S1301: The node 7 sends a packet 7 to the node 8 through a sending port a.

In an embodiment, sending ports used by different nodes to send different types of packets may be preconfigured. For this process, refer to the descriptions in the method 700. Details are not described herein again.

In an embodiment, the packet 7 may include raw data (raw data).

In an embodiment, the packet 7 includes information about a source ID and a destination ID. For example, the source ID is 7 and the destination ID is 8.

S1302: The node 8 receives the packet 7 through a receiving port b.

After receiving the packet 7, the node 8 may parse the packet 7 to obtain the information about the source ID and the destination ID. When the destination ID in the packet 7 matches an ID of the node 8, S1303 may be performed. Otherwise, the node 8 may directly forward the packet 7 to a next node through a sending port b.

S1303: The node 8 performs fusion on the raw data in the packet 7 and local raw data of the node 8, to obtain data 1 obtained through fusion.

The data 1 may be the seventh data.

For a process in which the node 8 performs fusion on the raw data in the packet 7 and the local raw data of the node 8, refer to an existing fusion technology. This is not specifically limited in embodiments of this application.

S1304: The node 8 sends a packet 8 to the node 7 through the port b, where the packet 8 includes at least a part of the data 1 obtained through fusion.

The port b of the node 8 may be used as a receiving port, or may be used as a sending port.

In an embodiment, a source ID in the packet 8 is 8 and a destination ID in the packet 8 is 7.

S1305: The node 7 receives the packet 8 through the port a, and processes the packet 8 to obtain data 2.

The data 2 may be the eighth data.

The port a of the node 7 may be used as a sending port, or may be used as a receiving port.

For example, when determining that the destination ID in the packet 8 matches an ID of the node 7, the node 7 may process data in the packet 8 to obtain the data 2.

For example, the node 7 may perform fusion on local data of the node 7 and the data in the packet 8, to obtain the data 2 obtained through fusion.

S1306: The node 7 sends a packet 9 to the node 8 through the port a, where the packet 9 includes at least a part of the data 2.

In an embodiment, a source ID in the packet 9 is 7 and a destination ID in the packet 9 is 8.

S1307: The node 8 receives the packet 9 through the port b, and processes data in the packet 9 to obtain data 3.

The data 3 may be the second data.

For example, the node 8 may perform data fusion on at least the part of the data 2 in the packet 9 and the data 1 in S1303 to obtain the data 3.

When determining that the destination ID in the packet 9 matches the ID of the node 8, the node 8 may further fuse the data in the packet 9 and the data 1 obtained through fusion, to obtain the data 3 obtained through fusion.

A quantity of times that the node 7 and the node 8 perform data fusion is not specifically limited above.

S1308: The node 8 sends a packet 10 to a next node through a port a, where the packet 10 includes the data 3.

In an embodiment, a source ID in the packet 10 is 8, and a destination ID in the packet 10 is N.

S1309: After receiving the packet 10, the next node checks the source ID and the destination ID in the packet 10, and completes forwarding based on a matching relationship.

S1310: Repeat S1309 until the node N receives the packet 10.

After receiving the packet 10 through a receiving port b, the node N may parse the packet 10. When the destination ID in the packet 10 matches an ID of the node N, the node N may process data in the packet 10. For example, the node N may further perform subsequent processing such as fusion sensing and planning and control on the data in the packet 10.

In an embodiment, if nodes shown in FIG. 12 are in a ring networking architecture (for example, the nodes are connected in a bidirectional ring connection manner), a node on the left side of the node 7 may be configured to send data clockwise. For example, the node 1 directly sends a packet to the node N in the bidirectional ring connection manner. In this way, interference caused by local heavy-traffic data communication between the node 7 and the node 8 to data transmission of another node can be avoided.

In embodiments of this application, distributed collaboration may be performed between the node 7 and the node 8, and a complex interaction process may be performed between the node 7 and the node 8, so that a process in which the node N processes data of the node 7 and data of the node 8 is omitted. This helps relieve pressure of the node N during data processing, and also helps reduce data traffic outside the node 7 and the node 8. For example, because data fusion is performed between the node 7 and the node 8, data traffic between the node 8 and the node N can be reduced.

Optionally, the first data includes a plurality of pieces of data, and the plurality of pieces of data are located in a plurality of virtual channels with different priorities in the first node. That a first node sends first data to a second node includes: The first node sends the plurality of pieces of data to the second node based on a priority of each of the plurality of virtual channels with different priorities.

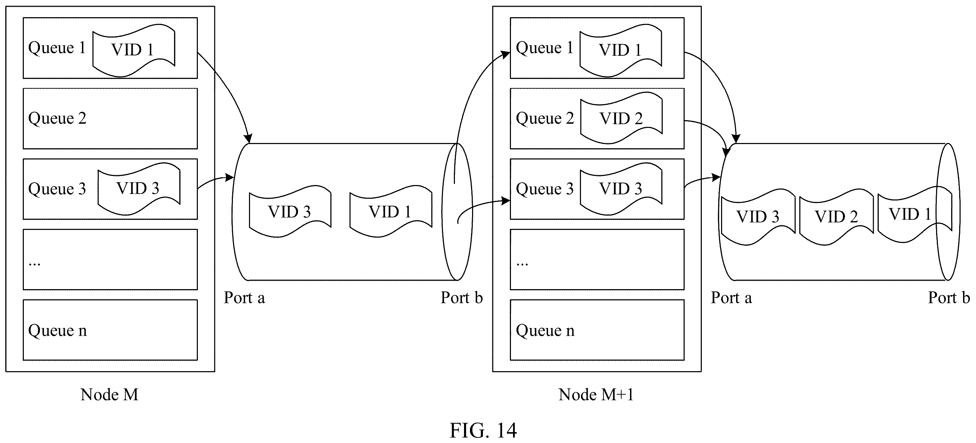

FIG. 14 is a diagram of transmitting data through a virtual channel according to an embodiment of this application. As shown in FIG. 14, n transceiver queues may be maintained in each communication node, and each transceiver queue may correspond to one virtual channel. A priority of each virtual channel can be flexibly configured. For example, different priorities are configured for different virtual channels.

For example, Table 2 shows a correspondence between different data types, virtual channel identities (virtual channel identity, VID), and priorities.

**Table 2**

| Data type | Virtual channel identity | Priority |
|---|---|---|
| Data type 1 | VID1 | Priority 1 |
| Data type 2 | VID2 | Priority 2 |
| Data type 3 | VID3 | Priority 3 |
| Data type 4 | VID4 | Priority 4 |
| ... | ... | ... |

For another example, a same priority may alternatively be configured for different virtual channels. Table 3 shows another correspondence between different data types, VIDs, and priorities.

**Table 3**

| Data type | Virtual channel identity | Priority |
|---|---|---|
| Data type 1 | VID1 | Priority 1 |
| Data type 2 | VID2 | Priority 1 |
| Data type 3 | VID3 | Priority 2 |
| Data type 4 | VID4 | Priority 2 |
| ... | ... | ... |

The foregoing data types may indicate data collected by different sensors, for example, data collected by a forward lidar, data collected by an imaging radar, data collected by a front left radar, and data collected by a front right radar.

The priority 1 may be higher than the priority 2, the priority 2 may be higher than the priority 3, and the priority 3 may be higher than the priority 4.

Table 2 and Table 3 are merely examples. This is not specifically limited in embodiments of this application.

For example, a packet sent by a node M to a node M+1 includes data of the data type 1 and data of the data type 3, and a priority of the data of the data type 1 is higher than a priority of the data of the data type 3. In this case, the node M may place the data of the data type 1 on a virtual channel 1 with a higher priority, place the data of the data type 3 on a virtual channel 3 with a lower priority, and send the packet to the node M+1 through sequential polling. The packet includes information about a VID, and the information about the VID indicates a priority of a data type on a virtual channel.

A data type of local data of the node M+1 is the data type 2, and a priority of the data type 2 is higher than a priority of the data type 3 and lower than a priority of the data type 1. When a destination ID in the packet does not match an ID of the node M+1, after receiving the packet sent by the node M, the node M+1 may place, based on the information about the VID in the packet, the data of the data type 1 on the virtual channel 1, data of the data type 2 on a virtual channel 2, and the data of the data type 3 on the virtual channel 3, and send the packet to a next node through sequential polling.

Optionally, the first node, the second node, and the third node are located in a bidirectional ring network, the second data is transmitted to the third node in a first direction, and the method 500 further includes: When it is detected that a connection fault occurs between a first sending port of the second node and a first receiving port of a fourth node, the second node sends a broadcast message indicating the connection fault, and the second node adjusts a data sending port from the first sending port to a second sending port. The fourth node is a next node connected to the first node in the first direction.

Optionally, the method 500 further includes: The first node determines, based on the broadcast message, whether to adjust a data sending port.

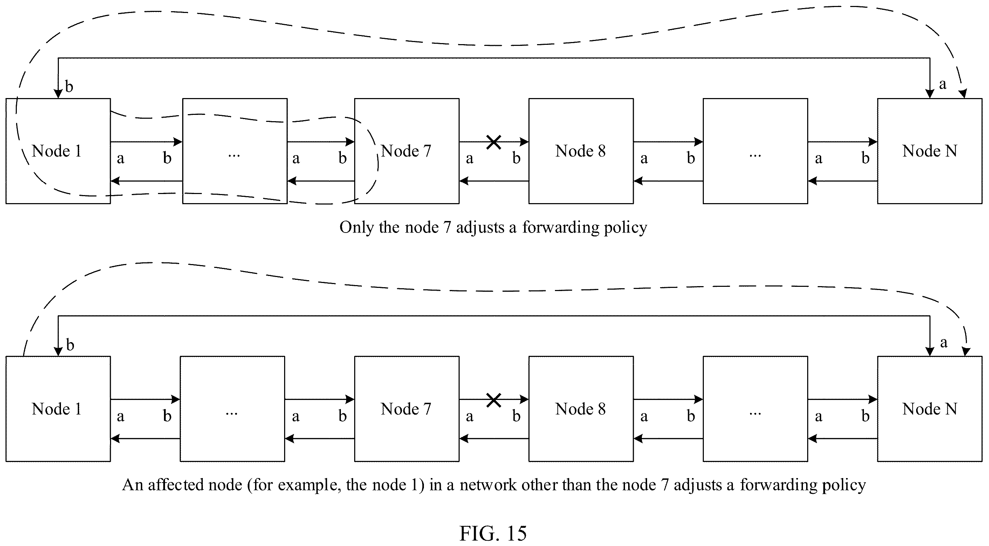

FIG. 15 is a diagram of fault detection based on bidirectional ring networking according to an embodiment of this application. As shown in FIG. 15, a node 7 detects a connection fault between the node 7 and a node 8. For example, the connection fault occurs when the node 7 sends a packet to a port b of the node 8 through a port a. The node 7 may send a broadcast packet through a port b, and adjust a sending port of the node 7 to the port b. The broadcast packet indicates that the connection fault occurs between the sending port a of the node 7 and the receiving port b of the node 8. For example, the broadcast packet may include a destination ID, and the destination ID may be ID0. After receiving the broadcast packet, another node in a network may learn that the port a of the node 7 is faulty.

The foregoing broadcast packet may be the foregoing broadcast message.

The node 7 may be the second node, and the node 8 may be the fourth node.

After receiving the broadcast packet, the another node in the network determines whether to modify a forwarding policy based on a receiving port and a networking topology of the another node.

For example, in a bus bandwidth-insensitive scenario, the node 7 may adjust a forwarding policy, and the forwarding policy of the another node remains unchanged (or configurations of the receiving port and a sending port of the another node may remain unchanged). For example, the sending port of the node 7 is adjusted to the port b. This helps reduce impact of a connection fault on multi-node collaboration and a node that has a subscription requirement.

That the node 7 adjusts a forwarding policy may include: The node 7 adjusts a data sending port. For example, the data sending port is adjusted from the port a to the port b.

For another example, in a bus bandwidth-limited scenario, the another node may adjust the sending port based on a position at which the connection fault occurs, to eliminate transmission path redundancy and ensure correct execution of a basic function. For example, an affected node in the network may change a forwarding policy to reverse transmission. For example, before the port a of the node 7 is faulty, a node 1 sends a packet to a node N in a counterclockwise transmission manner. After the port a of the node 7 is faulty, a forwarding policy of the node 1 may be adjusted to send a packet to the node N in a clockwise transmission manner.

Optionally, the another node may store configuration information of whether to adjust the forwarding policy when receiving the broadcast packet. For example, configuration information stored in a node 6 indicates the node 6 to adjust a forwarding policy after receiving the broadcast packet. In this case, after receiving the broadcast packet, the node 6 may adjust a data sending port to a port b. Alternatively, the node 6 is adjusted from sending data to the node N clockwise to sending data to the node N clockwise.

Optionally, the node that has a subscription requirement determines, according to a preset configuration policy, whether a normal working mode of the node is affected. If the normal working mode of the node is affected, the fault may be reported to the node N, and a function is degraded or the node stops working based on an actual service requirement.

For example, the node 8 subscribes to packet content of the node 1. When the node 1 performs reverse transmission (for example, sends a packet in a clockwise transmission manner), a packet that is sent by the node 1 and whose destination address is the node N does not pass through the node 8. Because the node 8 does not receive data of the node 1, data accuracy of the node 8 may be affected. The node 8 may send indication information to the node N, where the indication information indicates that the data accuracy of the node 8 is reduced.

Optionally, when the data accuracy of the node 8 is greatly affected, the node 8 may perform function degradation.

Optionally, if accuracy of the node N during data processing is reduced due to reduction of the data accuracy of the node 8, the node N may also perform function degradation.

In an embodiment, if the node 8 subscribes to a packet of the node 1, when determining that the connection fault occurs between the port a of the node 7 and the port b of the node 8, the node 8 may send a broadcast packet through a port a. The broadcast packet indicates that the node 8 subscribes to the packet of the node 1. In this way, after receiving the broadcast packet sent by the node 8 and receiving the packet of the node 1, the node N may forward the packet to the node 8.

In an embodiment, the node N stores subscription information, and the subscription information further indicates that the node 8 subscribes to the packet of the node 1. In this way, after receiving the broadcast packet sent by the node 8 and receiving the packet of the node 1, the node N may forward the packet to the node 8.

If a bidirectional connection fault occurs between the node 7 and the node 8, that is, the port a of the node 7 cannot perform sending or receiving normally, the node 8 needs to repeat an action of the node 7. For example, the node 8 may send a broadcast packet, where the broadcast packet indicates that the connection fault occurs between the sending port b of the node 8 and the receiving port a of the node 7.

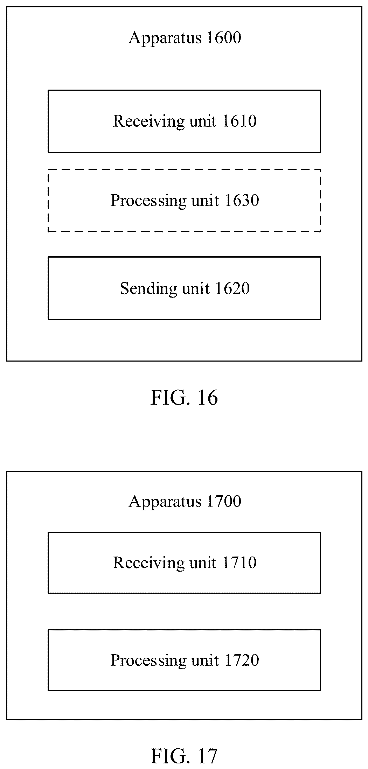

FIG. 16 is a block diagram of a data transmission apparatus 1600 according to an embodiment of this application. As shown in FIG. 16, the apparatus 1600 includes: a receiving unit 1610, configured to receive first data from a first node; and a sending unit 1620, configured to send second data to a third node. The second data is data obtained by processing the first data by a processing unit 1630 of the apparatus 1600, or the second data is the same as the first data. The first node, the apparatus 1600, and the third node are connected in series, the first node and the apparatus 1600 are sensing nodes, and the third node is a regional communication unit or a data processing node.

Optionally, a destination address of the first data is the apparatus 1600, and the processing unit 1630 is configured to stitch the first data and third data that is obtained by the apparatus through sensing, to obtain the second data.

Optionally, a destination address of the first data is the apparatus 1600, and the processing unit 1630 is configured to perform data fusion on the first data and fourth data that is obtained by the apparatus through sensing, to obtain the second data.

Optionally, the apparatus 1600 is a node that subscribes to data of the first node, and a destination address of the first data is the third node. The processing unit 1630 is configured to: store the first data in the apparatus 1600; and process, based on the first data, fifth data obtained by the apparatus through sensing, to obtain the second data.

Optionally, the sending unit 1620 is further configured to send the first data to the third node.

Optionally, a destination address of the first data is the apparatus 1600. The processing unit 1630 is configured to perform data fusion on the first data and sixth data that is obtained by the apparatus 1600 through sensing, to obtain seventh data. The sending unit 1620 is further configured to send at least a part of the seventh data to the first node, where a destination address of at least the part of the data is the first node. The receiving unit 1610 is further configured to receive the eighth data from the first node, where the eighth data is data obtained by processing at least the part of the data by the first node, and a destination address of the eighth data is the apparatus 1600. The processing unit 1630 is further configured to process the eighth data, to obtain the second data.

Optionally, the second data includes a plurality of pieces of data, and the plurality of pieces of data are located in a plurality of virtual channels with different priorities in the apparatus 1600. The sending unit 1620 is configured to send the plurality of pieces of data to the third node based on a priority of each of the plurality of virtual channels with different priorities.

Optionally, the apparatus 1600 further includes a detection unit and a port adjustment unit, the first node, the apparatus 1600, and the third node are located in a bidirectional ring network, and the second data is transmitted to the third node in a first direction. The detection unit is configured to detect that a connection fault occurs between a first sending port of the apparatus and a first receiving port of a fourth node, where the fourth node is a next node connected to the apparatus 1600 in the first direction. The sending unit 1620 is configured to send, through a second sending port, a broadcast message indicating the connection fault. The port adjustment unit is configured to adjust a data sending port from the first sending port to the second sending port.

The apparatus 1600 may be the second node, or the apparatus 1600 may be located in the second node.

FIG. 17 is a block diagram of a data transmission apparatus 1700 according to an embodiment of this application. As shown in FIG. 17, the apparatus 1700 includes: a receiving unit 1710, configured to receive second data from a second node, where the second data is data obtained by processing first data from a first node by the second node, or the second data is the same as the first data; and a processing unit 1720, configured to process the second data. The first node, the second node, and the apparatus 1700 are connected in series, the first node and the second node are sensing nodes, and the apparatus 1700 is a regional communication unit or a data processing node.

Optionally, the processing unit 1720 is configured to generate a vehicle control instruction based on the second data.

The apparatus 1700 may be the third node, or the apparatus 1700 may be located in the third node.

It should be understood that division into units in the apparatus is merely logical function division. During actual implementation, all or some of the units may be integrated into one physical entity or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the apparatus may be implemented in a form of software invoked by a processor, or all units may be implemented in a form of a hardware circuit, or some units may be implemented in a form of software invoked by a processor, and a remaining part may be implemented in a form of a hardware circuit.

Each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated and implemented in a form of a SoC. The SoC may include at least one processor, configured to implement any one of the foregoing methods or implement functions of the units of the apparatus. Types of the at least one processor may be different. For example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions. The processing unit executes the instructions stored in the storage unit, so that the apparatus performs the methods or the steps performed in the foregoing embodiments.

An embodiment of this application further provides an intelligent driving device. The intelligent driving device may include the foregoing apparatus 1600 or the foregoing apparatus 1700.

An embodiment of this application further provides a computer program product. The computer program product includes computer program code. When the computer program code is run on a computer, the computer is enabled to perform the data transmission method.

An embodiment of this application further provides a computer-readable medium. The computer-readable medium stores program code. When the computer program code is run on a computer, the computer is enabled to perform the data transmission method.

In an implementation process, steps in the foregoing methods may be implemented by using a hardware integrated logical circuit in a processor, or by using instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be understood that in embodiments of this application, the memory may include a read-only memory and a random access memory, and provide instructions and data to the processor.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
sending, by a first node, first data to a second node;
receiving, by the second node, the first data from the first node; and
obtaining, by a third node, second data from the second node, wherein the second data is data obtained by processing the first data by the second node, or the second data is the same as the first data, wherein
the first node, the second node, and the third node are connected in series, the first node and the second node are sensing nodes, and the third node is a regional communication unit or a data processing node.

2. The method according to claim 1, wherein a destination address of the first data is the second node, and before the obtaining, by a third node, second data from the second node, the method further comprises:
stitching, by the second node, the first data and third data that is obtained by the second node through sensing, to obtain the second data.

3. The method according to claim 1, wherein a destination address of the first data is the second node, and before the obtaining, by a third node, second data from the second node, the method further comprises:
performing, by the second node, data fusion on the first data and fourth data that is obtained by the second node through sensing, to obtain the second data.

4. The method according to claim 1, wherein the second node is a node that subscribes to data of the first node, a destination address of the first data is the third node, and before the obtaining, by a third node, second data from the second node, the method further comprises:
storing, by the second node, the first data in the second node; and
processing, by the second node based on the first data, fifth data obtained by the second node through sensing, to obtain the second data.

5. The method according to claim 4, wherein the method further comprises:
obtaining, by the third node, the first data from the second node.

6. The method according to claim 1, wherein a destination address of the first data is the second node, and before the obtaining, by a third node, second data from the second node, the method further comprises:
performing, by the second node, data fusion on the first data and sixth data that is obtained by the second node through sensing, to obtain seventh data;
sending, by the second node, at least a part of the seventh data to the first node, wherein a destination address of at least the part of the data is the first node;
receiving, by the first node, at least the part of the data from the second node;
processing, by the first node, at least the part of the data to obtain eighth data;
sending, by the first node, the eighth data to the second node, wherein a destination address of the eighth data is the second node;
receiving, by the second node, the eighth data from the first node; and
processing, by the second node, the eighth data, to obtain the second data.

7. The method according to any one of claims 1 to 6, wherein the first data comprises a plurality of pieces of data, and the plurality of pieces of data are located in a plurality of virtual channels with different priorities in the first node; and
the sending, by a first node, first data to a second node comprises:
sending, by the first node, the plurality of pieces of data to the second node based on a priority of each of the plurality of virtual channels with different priorities.

8. The method according to any one of claims 1 to 7, wherein the first node, the second node, and the third node are located in a bidirectional ring network, the second data is transmitted to the third node in a first direction, and the method further comprises:
when it is detected that a connection fault occurs between a first sending port of the second node and a first receiving port of a fourth node, sending, by the second node, a broadcast message indicating the connection fault, and adjusting, by the second node, a data sending port from the first sending port to a second sending port, wherein the fourth node is a next node connected to the first node in the first direction.

9. The method according to claim 8, wherein the method further comprises:
determining, by the first node based on the broadcast message, whether to adjust a data sending port.

10. A data transmission method, comprising:
receiving, by a second node, first data from a first node; and
sending, by the second node, second data to a third node, wherein the second data is data obtained by processing the first data by the second node, or the second data is the same as the first data, wherein
the first node, the second node, and the third node are connected in series, the first node and the second node are sensing nodes, and the third node is a regional communication unit or a data processing node.

11. The method according to claim 10, wherein a destination address of the first data is the second node, and before the sending, by the second node, second data to a third node, the method further comprises:
stitching, by the second node, the first data and third data that is obtained by the second node through sensing, to obtain the second data.

12. The method according to claim 10, wherein a destination address of the first data is the second node, and before the sending, by the second node, second data to a third node, the method further comprises:
performing, by the second node, data fusion on the first data and fourth data that is obtained by the second node through sensing, to obtain the second data.

13. The method according to claim 10, wherein the second node is a node that subscribes to data of the first node, a destination address of the first data is the third node, and before the sending, by the second node, second data to a third node, the method further comprises:
storing, by the second node, the first data in the second node; and
processing, by the second node based on the first data, fifth data obtained by the second node through sensing, to obtain the second data.

14. The method according to claim 13, wherein the method further comprises:
sending, by the second node, the first data to the third node.

15. The method according to claim 10, wherein a destination address of the first data is the second node, and before the sending, by the second node, second data to a third node, the method further comprises:
performing, by the second node, data fusion on the first data and sixth data that is obtained by the second node through sensing, to obtain seventh data;
sending, by the second node, at least a part of the seventh data to the first node, wherein a destination address of at least the part of the data is the first node;
receiving, by the second node, the eighth data from the first node, wherein the eighth data is data obtained by processing at least the part of the data by the first node, and a destination address of the eighth data is the second node; and
processing, by the second node, the eighth data, to obtain the second data.

16. The method according to any one of claims 10 to 15, wherein the second data comprises a plurality of pieces of data, and the plurality of pieces of data are located in a plurality of virtual channels with different priorities in the second node; and
the sending, by the second node, second data to a third nod comprises:
sending, by the second node, the plurality of pieces of data to the third node based on a priority of each of the plurality of virtual channels with different priorities.

17. The method according to any one of claims 10 to 16, wherein the first node, the second node, and the third node are located in a bidirectional ring network, the second data is transmitted to the third node in a first direction, and the method further comprises:
when it is detected that a connection fault occurs between a first sending port of the second node and a first receiving port of a fourth node, sending, by the second node, a broadcast message indicating the connection fault, and adjusting, by the second node, a data sending port from the first sending port to a second sending port, wherein the fourth node is a next node connected to the second node in the first direction.

18. A data transmission method, comprising:
receiving, by a third node, second data from a second node, wherein the second data is data obtained by processing first data from a first node by the second node, or the second data is the same as the first data; and
processing, by the third node, the second data, wherein
the first node, the second node, and the third node are connected in series, the first node and the second node are sensing nodes, and the third node is a regional communication unit or a data processing node.

19. The method according to claim 18, wherein the processing, by the third node, the second data comprises:
generating, by the third node, a vehicle control instruction based on the second data.

20. A data transmission apparatus, comprising:
a receiving unit, configured to receive first data from a first node; and
a sending unit, configured to send second data to a third node, wherein the second data is data obtained by processing the first data by a processing unit of the apparatus, or the second data is the same as the first data, wherein
the first node, the apparatus, and the third node are connected in series, the first node and the apparatus are sensing nodes, and the third node is a regional communication unit or a data processing node.

21. The apparatus according to claim 20, wherein a destination address of the first data is the apparatus; and
the processing unit is configured to stitch the first data and third data that is obtained by the apparatus through sensing, to obtain the second data.

22. The apparatus according to claim 20, wherein a destination address of the first data is the apparatus; and
the processing unit is configured to perform data fusion on the first data and fourth data that is obtained by the apparatus through sensing, to obtain the second data.

23. The apparatus according to claim 20, wherein the apparatus is a node that subscribes to data of the first node, and a destination address of the first data is the third node; and
the processing unit is configured to: store the first data in the apparatus; and
process, based on the first data, fifth data obtained by the apparatus through sensing, to obtain the second data.

24. The apparatus according to claim 23, wherein the sending unit is further configured to send the first data to the third node.

25. The apparatus according to claim 20, wherein a destination address of the first data is the apparatus;
the processing unit is configured to perform data fusion on the first data and sixth data that is obtained by the apparatus through sensing, to obtain seventh data;
the sending unit is further configured to send at least a part of the seventh data to the first node, wherein a destination address of at least the part of the data is the first node;
the receiving unit is further configured to receive the eighth data from the first node, wherein the eighth data is data obtained by processing at least the part of the data by the first node, and a destination address of the eighth data is the apparatus; and
the processing unit is further configured to process the eighth data, to obtain the second data.

26. The apparatus according to any one of claims 20 to 25, wherein the second data comprises a plurality of pieces of data, and the plurality of pieces of data are located in a plurality of virtual channels with different priorities in the apparatus; and
the sending unit is configured to send the plurality of pieces of data to the third node based on a priority of each of the plurality of virtual channels with different priorities.

27. The apparatus according to any one of claims 20 to 26, wherein the apparatus further comprises a detection unit and a port adjustment unit, the first node, the apparatus, and the third node are located in a bidirectional ring network, and the second data is transmitted to the third node in a first direction;
the detection unit is configured to detect that a connection fault occurs between a first sending port of the apparatus and a first receiving port of a fourth node, wherein the fourth node is a next node connected to the apparatus in the first direction;
the sending unit is configured to send, through a second sending port, a broadcast message indicating the connection fault; and
the port adjustment unit is configured to adjust a data sending port from the first sending port to the second sending port.

28. A data transmission apparatus, comprising:
a receiving unit, configured to receive second data from a second node, wherein the second data is data obtained by processing first data from a first node by the second node, or the second data is the same as the first data; and
a processing unit, configured to process the second data, wherein
the first node, the second node, and the apparatus are connected in series, the first node and the second node are sensing nodes, and the apparatus is a regional communication unit or a data processing node.

29. The apparatus according to claim 28, wherein the processing unit is configured to:
generate a vehicle control instruction based on the second data.

30. A data transmission apparatus, comprising:
a memory, configured to store a computer program; and
a processor, configured to execute the computer program stored in the memory, to enable the apparatus to perform the data transmission method according to any one of claims 1 to 19.

31. An intelligent driving device, comprising the data transmission apparatus according to any one of claims 20 to 30.

32. The intelligent driving device according to claim 31, wherein the intelligent driving device is a vehicle.

33. A computer-readable storage medium, wherein the computer-readable storage medium stores a computer program, and when the computer program is executed by a computer, the data transmission method according to any one of claims 1 to 19 is implemented.

34. A chip, comprising a circuit, wherein the circuit is configured to perform the data transmission method according to any one of claims 1 to 19.
